# EUROPEAN PATENT SPECIFICATION

(11) **EP 2 327 616 B1**
(45) Date of publication and mention of the grant of the patent: **12.12.2012**
(21) Application number: 10182582.6
(22) Date of filing: 29.09.2010
(51) Int. Cl.: B62K 19/36, B62J 1/08

(54) **Angle adjusting device for bicycle saddle**
Winkeleinstellvorrichtung für Fahrradsattel
Dispositif de réglage d'inclinaison pour selle de bicyclette

(30) Priority: 30.11.2009 KR 20090116809
(43) Date of publication of application: 01.06.2011
(73) Proprietor: Kim, Chun-Choo, Seoul 120-113 (KR)
(72) Inventor: Kim, Chun-Choo, Seoul 120-113 (KR)
(74) Representative: Pulieri, Gianluca Antonio

(56) References cited:
- EP-A1- 0 542 650
- WO-A1-91/06444
- WO-A1-03/043876
- DE-A1- 4 416 196

## Description

### Field of the invention

The present invention relates to an angle adjuster for a bicycle saddle, in more detail, an angle adjuster for a bicycle saddle that allows a user to maintain a stable position by adjusting angle and height of the saddle while the bicycle travels.

### Description of Related Art

In general, bicycles are vehicles that a user ride by rotating its wheels with two legs and the user sits on the saddle with the hands holding the handlebars and alternatively pushes the pedals with two legs such that the wheel are rotated by a chain. Although there are usually two wheels, there may be one or three wheels. Those human-powered bicycles have been widely used as one of typical means of transportation, and particularly, can be recently applied for various fields, as sport outfits improving health and recreation means, while demand is increasing for the environment-friendly features.

The structure of the bicycles of the related art include: a front wheel and a rear wheel that rotate on the ground to move the bicycles; a frame that has handlebars steering the front wheel at the front upper portion and supporting the front wheel and the rear wheel to be rotatable; pedals that are linked with the rear wheel by a chain to rotate the rear wheel; and a saddle assembly that is mounted at the rear upper portion of the frame for a user to ride.

Further, there have been bicycles equipped with a height adjuster to adjust height of the saddles to fit the body condition in the related art.

However, the saddles were fixed perpendicularly to the frame of the bicycles in the bicycles of the related art, such that it was difficult to adjust angle of the saddles to fit the user's body shape and riding position. That is, since the angle of the saddle were fixed, it was difficult to satisfy all of users having various body shapes. Further, the user's position inclines forward or backward from the bicycles, when the user goes up or comes down a slope with the bicycles, in which since the angle of the saddles is fixed, the user has difficulty in maintaining a comfortable position, thereby increasing the chance of an accident.

Therefore, the applicant (s) has made an application of an angle adjuster for a bicycle saddle in order to overcome the problems, which is disclosed in Korean Patent Publication No.2009-0085900, titled "Angle adjusting device for bicycle saddle". However, according to the related art, users have to directly operate a hinge unit of an angle adjuster under the saddle to adjust angle of the saddle, such that it was difficult to adjust the angle of the saddle while the bicycles run. A further angle adjusting device is known from FR 0 542 650 A1.

### Summary of the Invention

### Problems to be Solved by the Invention

The present invention addresses the problems of the related art and it is an object of the present invention to provide an angle adjuster for a bicycle saddle that allows users to ride the bicycle in a stable position by adjusting angle of the saddle to fit the body shapes of various users, and to easily correct the position by adjusting the angle of the saddle in accordance with the riding conditions of the user, by using an operating lever even though the bicycles runs.

Further, it is another object of the present invention to provide an angle adjuster for a bicycle saddle that makes it possible to adjust height of the saddle in accordance with riding conditions of the user while the bicycle runs.

### Means for Solving the Problems

In order to achieve the objects of the present invention, an angle adjuster for a bicycle saddle that is installed between a frame of a bicycle and a saddle and includes: a frame connector connected with the frame; a saddle connector supporting the saddle, rotatably connected to the upper end of the frame connector, and having a nose at bottom facing the frame connector; an angle adjusting assembly disposed between the frame connector and the saddle connector, and having a plurality of locking steps where the nose is selectively engaged to control rotational angle of the saddle connector; an operating lever mounted on the frame to operate the angle adjusting assembly; and a wire connecting the angle adjusting assembly with the operating lever and reciprocating the angle adjusting assembly, when the operating lever is operated.

The locking steps of the angle adjusting assembly are formed in step shapes having inclined stepped portions, and a nose of the saddle connector is selectively engaged with the locking steps in accordance with reciprocation of the angle adjusting assembly, such that rotational angle of the saddle connector is controlled.

Further, the angle adjuster for a bicycle saddle further includes an elastic member disposed between the frame connector and the angle adjusting assembly and providing elastic force such that the angle adjusting assembly is engaged with any one of the locking steps.

Further, the angle adjuster for a bicycle saddle further includes: a saddle support shaft supporting the saddle, reciprocating in the saddle connector, and having a plurality of locking grooves formed in the longitudinal direction of the shaft; a support spring elastically supporting the saddle support shaft such that the saddle is spaced apart from the saddle connector; a locking member selective locked in the locking grooves to control height of the saddle support shaft; a sub-operating lever mounted on the frame operating the locking member; and a sub-wire connecting the locking member with the sub-operating lever and operating the locking member, when the sub-operating lever is operated.

Further, the angle adjuster for a bicycle saddle further includes a sub-elastic member disposed between the saddle connector and the locking member to provide elastic force such that the locking member is locked in any one of the locking grooves.

Further, the angle adjuster for a bicycle saddle further includes: a plurality of locking grooves formed in the longitudinal direction of the frame connector and received in the frame; a support spring elastically supporting the frame connector such that the frame connector is spaced apart from the frame; a locking member selective locked in the locking grooves to control height of the frame connector with respect to the frame; a sub-operating lever mounted on the frame operating the locking member; and a sub-wire connecting the locking member with the sub-operating lever and operating the locking member, when the sub-operating lever is operated.

Further, the angle adjuster for a bicycle saddle further includes a sub-elastic member disposed between the frame and the locking member to provide elastic force such that the locking member is locked in any one of the locking grooves.

### Effect of the Invention

As described above, an angle adjuster for a bicycle saddle according to the present invention makes it possible to adjust angle of the saddle to fit the body shapes of users such that they can ride the bicycle in a comfortable position. Further, it is possible to prevent an accident by appropriately adjusting angle of the saddle such that the user's body does not inclined in one direction, when going up or coming down a slope. In particular, it is possible for the users to freely adjust the angle and height of the saddle by operating the operating lever while the bicycle runs, thereby providing the users with convenience.

### Detailed Description of the Invention

Embodiments of the present invention are described hereafter, but the present invention is not limited to the following embodiments, as long as it does not departing from the spirit of the present invention.

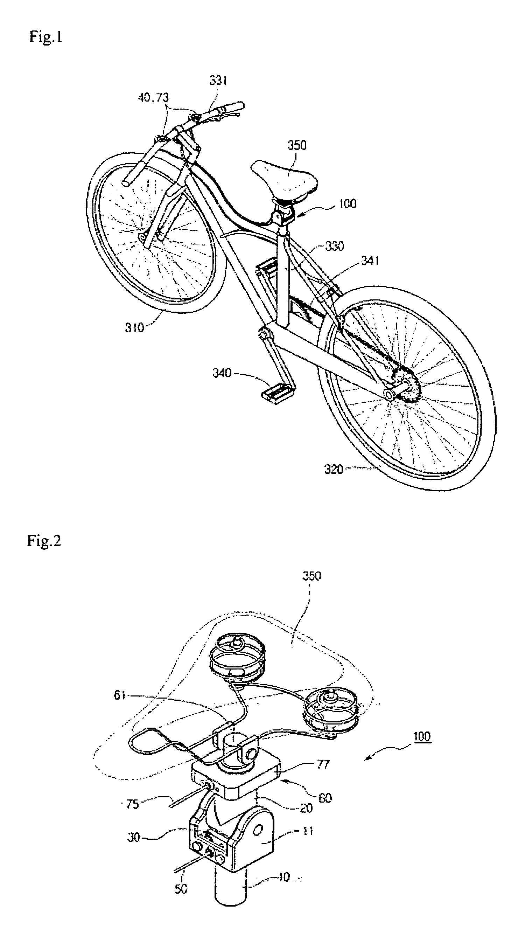

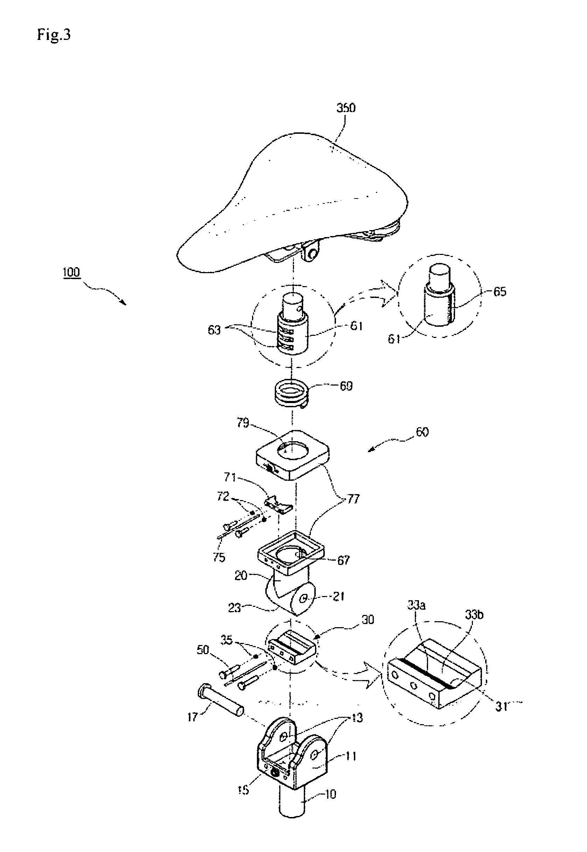

FIG. 1 is a view showing a bicycle equipped with an angle adjuster for a bicycle saddle according to a first embodiment of the present invention, FIG. 2 is a perspective view showing the structure of the angle adjuster for a bicycle saddle according to the first embodiment of the present invention, and FIG. 3 is an exploded perspective view showing the structure of the angle adjuster for a bicycle saddle according to the first embodiment of the present invention.

Referring to FIGS. 1 to 3, a bicycle equipped with an angle adjuster for a bicycle saddle according to a first embodiment of the present invention include: a front wheel 310 and a rear wheel 320 that rotate on the ground to move the bicycle; a frame 330 that has handlebars steering the front wheel 310 at the front upper portion and supporting the front wheel 310 and the rear wheel 320 to be rotatable; pedals 340 that are linked with the rear wheel 320 by a chain 341 to rotate the rear wheel 320; a saddle 350 that is mounted at the rear upper portion of the frame 330 for a user to ride; and an angle adjuster 100 for a saddle that is disposed between the frame 330 and the saddle 350 and makes it possible to adjust angle of the saddle 350 by an operating lever 40 mounted on the frame 330.

In this configuration, the angle adjuster for a bicycle saddle 100 according to the first embodiment includes: a frame connector 10 connected to the frame 350; a saddle connector 20 connected to the upper end of the frame connector 10 to support the saddle 350; an angle adjusting assembly 30 controlling the rotational angle of the saddle connector 20; the operating lever 40 operating the angle adjusting assembly 30; and a wire 50 connecting the angle adjusting assembly 30 with the operating lever.

The frame connector 10 is connected to the frame 330 of the bicycle which is disposed under the saddle 350 and has a hinge structure together with the saddle connector 20 such that the saddle connector 20 is rotatably connected to the upper end.

That is, a housing 11 covering the lower end of the saddle connector 20 is disposed on the upper end of the frame connector 10 and a hinge shaft 17 is fitted in a first through-hole 13 at both sides of the housing 11, such that the saddle connector 20 is fitted on the hinge shaft 17.

Further, a receiving portion 15 that receives the angle adjusting assembly 30 is formed inside the housing 11.

The saddle connector 20 supports the saddle 350 under the saddle 350, is rotatably connected to the upper end of the frame connector 10, and has a nose 23 at the lower end facing the frame connector 10.

That is, the saddle connector 20 has a second through-hole 21, which is formed at the lower portion and fitted on the hinge shaft 17, to be rotatably combined with the housing 11 of the frame connector 10, and the nose 23 contacting the angle adjusting assembly 30, at the bottom.

The angle adjusting assembly 30 is received in the receiving portion 15 of the frame connector 10 while being in contact with the saddle connector 20. A plurality of locking steps 31 selectively engaged with the nose 23 of the saddle connector 20 is formed on the top of the angle adjusting assembly to control the rotational angle of the saddle connector 20.

In this configuration, the locking steps 31 are formed in a step shape having inclination, such that the nose 23 of the saddle connector 20 is sequentially engaged. Further, a first stopper 33a is formed at the start of the locking steps 31 and a second stopper 33b is formed at the end of the locking steps 31 in the angle adjusting assembly 30 to support the nose 23 such that the saddle connector 20 does not rotate above predetermined angle.

According to the configuration described above, the angle adjusting assembly 30 is connected with the operating lever 40 mounted on the frame 330 of the bicycle by the wire 50 and reciprocates, when the operating lever 40 is operated, in which the nose 23 of the saddle connector 20 is selectively engaged with the locking steps 31, such that the rotational angle of the saddle connector 20 is controlled.

Further, an elastic member 35 is disposed between the receiving portion 15 of the frame connector 10 and the angle adjusting assembly 30 to provide elastic force such that the nose 23 of the saddle connector 20 is engaged with any one of the locking steps 31.

The operating lever 40 is mounted on the frame 330 of the bicycle to operate the angle adjusting assembly 30. That is, the operating lever 40 is operated to reciprocate the angle adjusting assembly 30 such that the nose 23 of the saddle connector 20 is selectively engaged with the locking steps 31. In this configuration, it is preferable that the operation lever 40 is installed on the handlebars 332 of the frame 330 of the bicycle to provide the user with operational convenience.

The wire 50 connects the angle adjusting assembly 30 with the operating lever 40 and reciprocates the angle adjusting assembly in the receiving portion 15 of the frame connector 10, when a user operates the operating lever 40.

Meanwhile, the angle adjuster for a bicycle saddle according to the first embodiment of the present invention may further include a height adjusting assembly 80 that makes it possible to adjust height of the saddle 350.

The height adjusting assembly 60 is composed of a sadly support shaft 61 that supports the saddle 350 of the bicycle, can reciprocate in the saddle connector 20, and has a plurality of locking grooves 63 formed in the longitudinal direction of the shaft, a support spring 69 that elastically supports the saddle support shaft 61 such that the saddle 350 of the bicycle is spaced apart from the saddle connector 20, a locking member 71 that is selective locked in the locking grooves 63 of the saddle support shaft 61 to control height of the saddle support shaft 61, a sub-operating lever 73 that is mounted on the frame 330 of the bicycle and operate the locking member 71, and a sub-wire 75 that connects the locking member 71 with the sub-operating lever 73 and operates the locking member 71, when the sub-operating lever 73 is operated.

A case 97 that receives the locking member 91 is disposed at the upper end of the saddle connector 20 and the saddle support shaft 81 protrudes through a through-hole 99 formed through the case 97.

Further, a guide rail 67 is vertically formed inside the saddle connector 20 where the saddle support shaft 61 is received and a rail groove 65 corresponding to the guide rail 67 is also formed on the saddle support shaft 61, such that they are combined. That is, the saddle support shaft 61 can ascend/descend in a predetermined direction along the guide rail 67 of the saddle connector 20 which is fitted in the rail groove 65.

According to the configuration described above, the support spring 69 received in the saddle connector 20 elastically supports the saddle support shaft 61 supporting the saddle 350 and the locking member 71 in the case 77 is locked in the locking groove 63 of the saddle support shaft 61, such that the height of the saddle support shaft 61 is fixed. In this structure, the height of the saddle support shaft 61 can be adjusted by operating the sub-operating lever 73 such that the locking member 71 connected with the sub-wire 75 moves forward or backward and the locking member 71 is selectively locked in the locking groove 63 of the saddle support shaft 61.

Further, a sub-elastic member 72 is disposed between the locking member 91 and the case 77 of the saddle connector 20 to provide elastic force such that the locking member 71 is locked in any one of the locking grooves 63 of the saddle support shaft 61.

The operation of the angle adjuster for a bicycle saddle having the above configuration according to the first embodiment of the present invention is described hereafter.

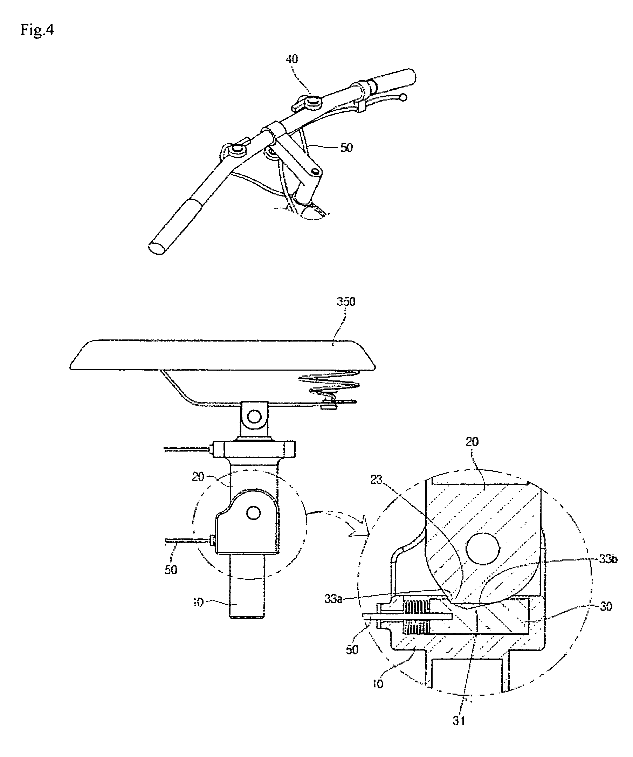

FIGS. 4 to 6 are views illustrating the angle adjustment operation of the angle adjuster for a bicycle saddle according to the first embodiment of the present invention.

As shown in FIG. 4, the nose 23 of the saddle connector 20 is engaged with the uppermost locking step 31 in the locking steps 31 of the angle adjusting assembly, when the operating lever 40 is not operated by a user.

In this position, the nose 23 is supported by the first stopper 33a and the bottom of the saddle connector 20 is supported by the second stopper 33b such that the saddle connector 20 does not rotate.

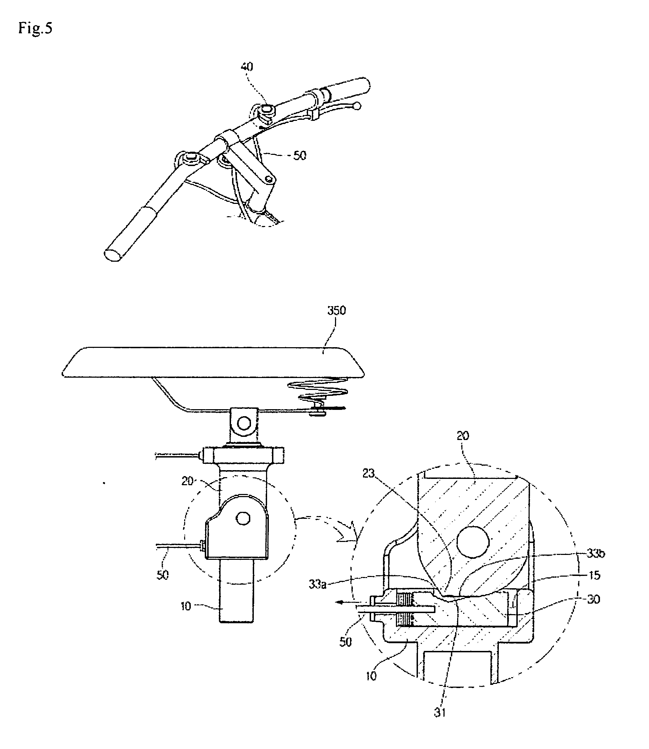

As shown in FIG. 5, as a user operates the operating lever 40 to adjust the angle of the saddle 350, the wire 50 connected with the operating lever 40 is pulled and the angle adjusting assembly 40 is moved backward in the receiving portion 15, such that the locking grooves 31 of the angle adjusting assembly 30 and the nose 23 of the saddle connector 20 are disengaged.

In this position, the user can adjust the angle of the saddle 350 and can also adjust the angle even on the saddle 350, and thus, it is possible to adjust the angle of the saddle 350 while the bicycle runs.

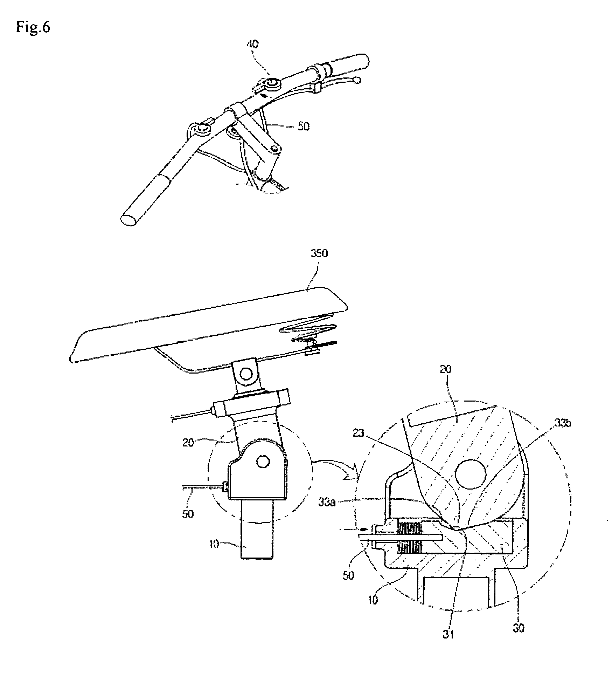

Next, as shown in FIG. 6, the angle of the saddle connector 20 is fixed with respect to the frame connector 10 by operating the operating lever 40 in the opposite way, after the angle adjustment of the saddle 350 is finished, in which the wire 50 is pushed and the angle adjusting assembly 30 connected to the wire 50 returns forward such that the nose 23 of the saddle connector 20 of which the angle has been adjusted is engaged with any one of the locking steps 31 of the angle adjusting assembly 30.

In this position, the nose is supported by the locking step 31 and the bottom of the saddle connector 20 is supported by the second stopper 33b such that the saddle connector 20 does not rotate.

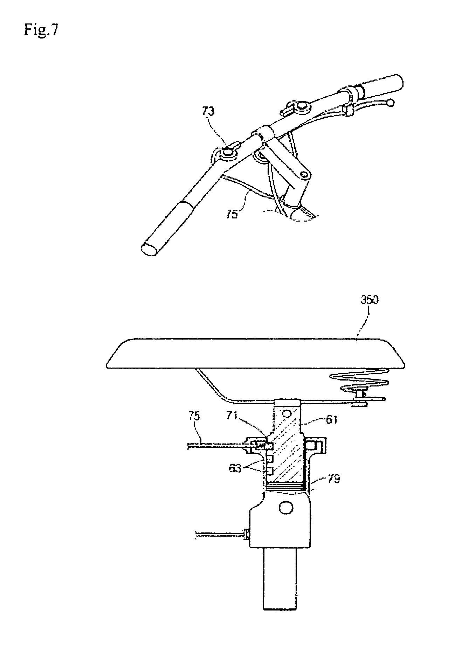

FIGS. 7 to 9 are views the height adjustment operation of the angle adjuster for a bicycle saddle according to the first embodiment of the present invention.

As shown in FIG. 7, the locking member 71 is locked in the uppermost locking groove 63 in the locking grooves 63 of the saddle support shaft 61 and fixes the height of the saddle 350, when the sub-operating lever 73 is not operated by the user.

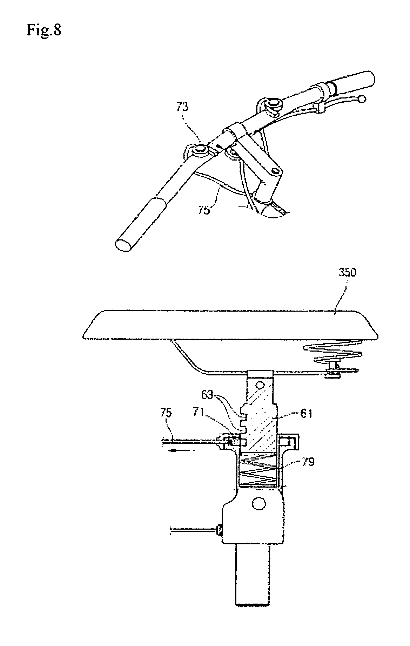

As shown in FIG. 8, as the user operates the sub-operating lever 73 to adjust the height of the saddle 350, the sub-wire 75 connected with the sub-operating lever 73 is pulled and the locking member 71 is separated from the locking groove 63 of the saddle support shaft 61 supporting the saddle 350 and the support spring 69 lifts the saddle support shaft 61.

In this position, the user can adjust the height of the saddle 350 and can also adjust the height even on the saddle 350, and thus, it is possible to adjust the height of the saddle 350 while the bicycle runs.

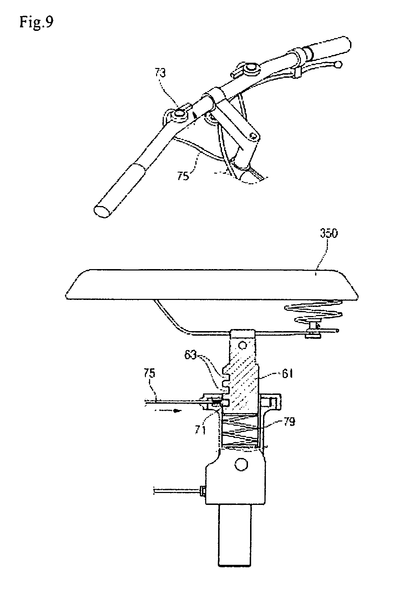

Next, as shown in FIG. 9, the height of the saddle 350 is fixed by operating the sub-operating lever 73 in the opposite way, after the height adjustment of the saddle 350 is finished, in which the sub-wire 75 is pushed and the locking member 71 connected to the sub-wire 75 is locked in any one of the locking grooves 63 of the saddle support shaft 61.

The configuration and operation of an angle adjuster for a bicycle saddle according to a second embodiment of the present invention is described hereafter.

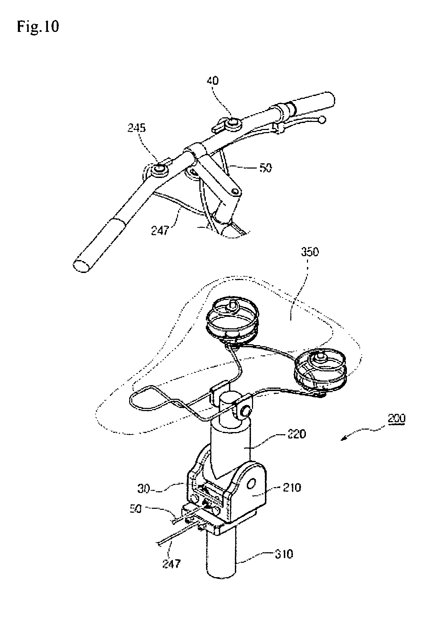

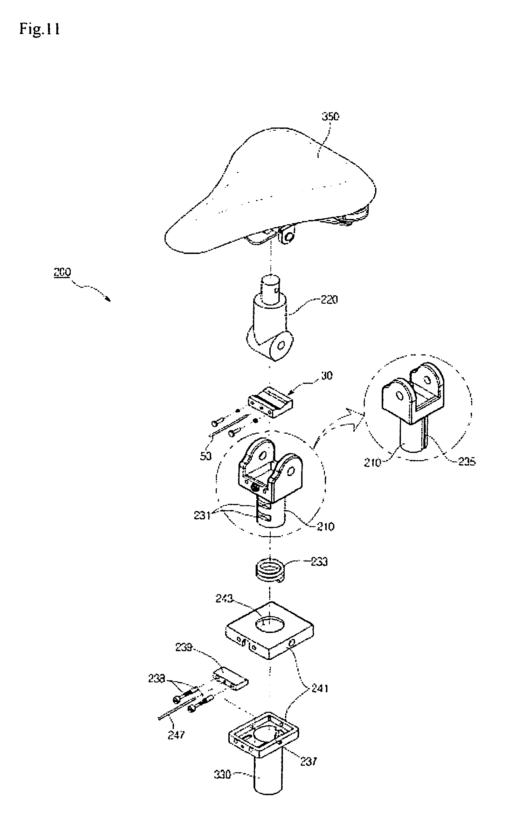

FIG. 10 is a perspective view illustrating the configuration of an angle adjuster for a bicycle saddle according to a second embodiment of the present invention. FIG. 11 is an exploded perspective view illustrating the configuration of the angle adjuster for a bicycle saddle according to the second embodiment of the present invention.

Referring to FIGS. 10 and 11, an angle adjuster for a bicycle saddle 200 according to the second embodiment of the present invention includes a frame connector 210, a saddle connector 220, an angle adjusting assembly 30, an operating lever 40, and a wire 50, which have the same configuration and operation as in the angle adjuster for a bicycle saddle 100 according to the first embodiment of the present invention, and a height adjusting assembly 240 is mounted on the frame 330 of the bicycle and the frame connector 210.

The lower end portion of the body of the frame connector 210 is received in the frame 330 of the bicycle 330, elastically supported by a support spring 233 disposed in the frame 330, and reciprocated by the height adjusting assembly 230, thereby adjusting the height.

The saddle connector 220 is disposed rotatably on the frame connector 210 while supporting the saddle 350, and the rotational angle of adjusted by the operation of the angle adjusting assembly 30. That is, as a user operates the operating lever 40 and the wire 50 is pulled, the angle adjusting assembly 30 connected to the wire 50 is operated, such that the rotational angle of the saddle connector 220 can be adjusted.

The height adjusting assembly 230 is composed of a plurality of locking grooves 231 formed in the longitudinal direction of the frame connector 210 and received in the frame 330 of the bicycle, a support spring 233 elastically supporting the frame connector 210 such that the frame connector 210 is spaced apart from the frame 330 of the bicycle, a locking member 239 selectively locked in the locking grooves 231 of the frame 330 to control the height of the frame connector 210 with respect to the frame 330 of the bicycle, a sub-operating lever 245 mounted on the frame 330 of the bicycle to operate the locking member 239, and a sub-wire 237 connecting the locking member 239 with the sub-operating lever 245 and operating the locking member 239, when the sub-operating lever 245 is operated. In this configuration, a case 241 that receives the locking member 239 is disposed at the upper end of the frame 330 and the frame connector 239 is inserted through a through-hole 234 formed through the case 241.

In this configuration, a guide rail 237 is vertically formed inside the frame 330 where the frame connector 210 is received and a rail groove 235 corresponding to the guide rail 237 is also formed on the frame connector 210, such that they are combined. That is, the frame connector 210 can ascend/descend in a predetermined direction along the guide rail 237 of the frame 330 which is fitted in the rail groove 235.

According to the configuration described above, since the support spring 233 supports the frame connector 210 in the frame 330 of the bicycle where the frame connector 210 is connected and the locking member 239 disposed in the case 241 is locked in the locking groove 231 of the frame connector 210, the height of the frame connector 210 is fixed. In this configuration, it is possible to adjust the height of the frame connector 210 with respect to the frame 330 of the bicycle by operating the sub-operating lever 245, in which the locking groove 239 connected to the sub-wire 247 moves forward or backward such that the locking member 239 is selectively locked in the locking grooves 231 of the frame connector 210.

Further, a sub-elastic member 238 is disposed between the locking member 239 and the case 241 of the frame connector 210 to provide elastic force such that the locking member 239 is locked in any one of the locking grooves 231 of the frame connector 210.

As described above, an angle adjuster for a bicycle saddle according to the present invention makes it possible to adjust angle of the saddle to fit the body shapes of users such that they can ride the bicycle in a comfortable position. Further, it is possible to prevent an accident by appropriately adjusting angle of the saddle such that the user's body does not inclined in one direction, when going up or coming down a slope. In particular, it is possible for the users to freely adjust the angle and height of the saddle by operating the operating lever while the bicycle runs, thereby providing the users with convenience.

It should be understood that the present invention may be modified in various ways, without departing from the scope of the present invention, by those skilled in the art, and is not limited to the embodiments described above and the accompanying drawings.

### Brief Description of the Drawings

FIG. 1 is a view showing a bicycle equipped with an angle adjuster for a bicycle saddle according to a first embodiment of the present invention.

FIG. 2 is a perspective view showing the structure of the angle adjuster for a bicycle saddle according to the first embodiment of the present invention.

FIG. 3 is an exploded perspective view showing the structure of the angle adjuster for a bicycle saddle according to the first embodiment of the present invention.

FIGS. 4 to 6 are views illustrating the angle adjustment operation of the angle adjuster for a bicycle saddle according to the first embodiment of the present invention.

FIGS. 7 to 9 are views the height adjustment operation of the angle adjuster for a bicycle saddle according to the first embodiment of the present invention.

FIG. 10 is a perspective view illustrating the configuration of an angle adjuster for a bicycle saddle according to a second embodiment of the present invention.

FIG. 11 is an exploded perspective view illustrating the configuration of the angle adjuster for a bicycle saddle according to the second embodiment of the present invention.

Reference Numerals

10, 210: FRAME CONNECTOR 20, 220: SADDLE CONNECTOR

23: NOSE 30: ANGLE ADJUSTING ASSEMBLY

31: LOCKING STEP 35: ELASTIC MEMBER

40: OPERATING LEVER 50: WIRE

60, 230: HEIGHT ADJUSTING ASSEMBLY 61: SADDLE SUPPORT SHAFT

63, 231: LOCKING GROOVE 69, 233: SUPPORT SPRING

71, 239: LOCKING MEMBER 72, 238: SUB-ELASTIC MEMBER

73, 245: SUB-OPERATING LEVER 75, 247: SUB-WIRE

## Claims

1. An angle adjuster (100) for a bicycle saddle that is installed between a frame (330) of a bicycle and a saddle (350), the angle adjuster (100) comprising:
- a frame connector (10) connected with the frame (330);
- a saddle connector (20) supporting the saddle (350), rotatably connected to the upper end of the frame connector (10), and having a nose (23) at bottom facing the frame connector (10);
- an angle adjusting assembly (30) disposed between the frame connector (10) and the saddle connector (20), and having a plurality of locking steps (31) where the nose (23) is selectively engaged to control rotational angle of the saddle connector (20);
- an operating lever (40) mounted on the frame (330) to operate the angle adjusting assembly (30);
- a wire (50) connecting the angle adjusting assembly (30) with the operating lever (40) and reciprocating the angle adjusting assembly (30), when the operating lever (40) is operated; and
- an elastic member (35) providing elastic force such that the nose (23) of the saddle connector (20) is engaged with any one of the locking steps (31);
said angle adjuster (100) being **characterized in that** the elastic member (35) is disposed between the frame connector (10) and the angle adjusting assembly (30), and **in that** the locking steps (31) of the angle adjusting assembly (30) are formed in step shapes having inclined stepped portions, and wherein the nose (23) of the saddle connector (20) is selectively engaged with the locking steps (31) in accordance with reciprocation of the angle adjusting assembly (30), such that rotational angle of the saddle connector (20) is controlled.

2. The angle adjuster for a bicycle saddle according to claim 1, further comprising:
- a saddle support shaft (61) supporting the saddle (350), reciprocating in the saddle connector (20), and having a plurality of locking grooves (63) formed in the longitudinal direction of the shaft;
- a support spring (69) elastically supporting the saddle support shaft such that the saddle (350) is spaced apart from the saddle connector (20);
- a locking member (71) selective locked in the locking grooves (63) to control height of the saddle support shaft (61);
- a sub-operating lever (73) mounted on the frame (330) operating the locking member (71); and
- a sub-wire (75) connecting the locking member (71) with the sub-operating lever (73) and operating the locking member, (71) when the sub-operating lever (73) is operated.

3. The angle adjuster for a bicycle saddle according to claim 2, further comprising a sub-elastic member (72) disposed between the saddle connector (20) and the locking member (71) to provide elastic force such that the locking member (71) is locked in any one of the locking grooves (63).

4. The angle adjuster for a bicycle saddle according to claim 1, further comprising:
- a plurality of locking grooves (231) formed in the longitudinal direction of the frame connector (10) and received in the frame (330);
- a support spring (233) elastically supporting the frame connector (10) such that the frame connector (10) is spaced apart from the frame (330);
- a locking member (239) selectively locked in the locking grooves (231) to control height of the frame connector (10) with respect to the frame (330);
- a sub-operating lever (245) mounted on the frame operating the locking member (239); and
- a sub-wire (247) connecting the locking member (239) with the sub-operating lever (245) and operating the locking member (239), when the sub-operating lever (245) is operated.

5. The angle adjuster for a bicycle saddle according to claim 4, further comprising a sub-elastic member (238) disposed between the frame (330) and the locking member (239) to provide elastic force such that the locking member (239) is locked in any one of the locking grooves (231).

## Patentansprüche

1. Winkeleinsteller (100) für einen Fahrradsattel, der zwischen einem Rahmen (330) eines Fahrrads und einem Sattel (350) installiert ist, wobei der Winkeleinsteller (100) umfasst:
- einen Rahmenverbinder (10), der mit dem Rahmen (330) verbunden ist;
- einen Sattelverbinder (20), der den Sattel (350) stützt bzw. trägt, der drehbar mit dem oberen Ende des Rahmenverbinders (10) verbunden ist und eine Nase (23) am Boden dem Rahmenverbinder (10) zugewandt aufweist;
- eine Winkeleinstellanordnung (30), die zwischen dem Rahmenverbinder (10) und dem Sattelverbinder (20) angeordnet ist und eine Mehrzahl von Verriegelungsstufen (31) aufweist, wo die Nase (23) selektiv in Eingriff gebracht wird, um einen Drehwinkel des Sattelverbinders (20) zu steuern bzw. zu regulieren;
- einen Betätigungshebel (40), der an dem Rahmen (330) montiert ist, um die Winkeleinstellanordnung (30) zu betätigen;
- einen Draht (50), der die Winkeleinstellanordnung (30) mit dem Betätigungshebel (40) verbindet und die Winkeleinstellanordnung (30) hin und her bewegt, wenn der Betätigungshebel (40) betätigt wird; und
- ein elastisches Glied (35), das eine elastische Kraft bereitstellt, so dass die Nase (23) des Sattelverbinders (20) mit einer der Verriegelungsstufen (31) in Eingriff gebracht wird;
wobei der Winkeleinsteller (100) **dadurch gekennzeichnet ist, dass** das elastische Glied (35) zwischen dem Rahmenverbinder (10) und der Winkeleinstellanordnung (30) angeordnet ist, und dadurch, dass die Verriegelungsstufen (31) der Winkeleinstellanordnung (30) in Stufenformen mit geneigten gestuften Abschnitten gebildet sind, und wobei die Nase (23) des Sattelverbinders (20) selektiv mit den Verriegelungsstufen (31) gemäß einer Hin- und HerBewegung der Winkeleinstellanordnung (30) in Eingriff gebracht wird, so dass ein Drehwinkel des Sattelverbinders (20) gesteuert bzw. reguliert wird.

2. Winkeleinsteller für einen Fahrradsattel nach Anspruch 1, ferner umfassend:
- eine Sattelstütz- bzw. -trägerwelle (61), die den Sattel (350) stützt bzw. trägt, sich in dem Sattelverbinder (20) hin und her bewegt und eine Mehrzahl von Verriegelungsnuten bzw. -rillen (63) aufweist, die in der Längsrichtung der Welle gebildet sind;
- eine Stütz- bzw. Trägerfeder (69), welche die Sattelstütz- bzw. -trägerwelle elastisch stützt bzw. trägt, so dass der Sattel (350) von dem Sattelverbinder (20) beabstandet ist;
- ein Verriegelungsglied (71), das selektiv in den Verriegelungsnuten bzw. -rillen (63) verriegelt wird bzw. ist, um eine Höhe der Sattelstütz- bzw. -trägerwelle zu steuern bzw. zu regulieren;
- einen Teil- bzw. Unterbetätigungshebel (73), der an dem Rahmen (330) montiert ist, der das Verriegelungsglied (71) betätigt; und
- einen Teil- bzw. Unterdraht (75), der das Verriegelungsglied (71) mit dem Teil- bzw. Unterbetätigungshebel (73) verbindet und das Verriegelungsglied (71) betätigt, wenn der Teil- bzw. Unterbetätigungshebel (73) betätigt wird.

3. Winkeleinsteller für einen Fahrradsattel nach Anspruch 2, ferner umfassend ein teil- bzw. unterelastisches Glied (72), das zwischen dem Sattelverbinder (20) und dem Verriegelungsglied (71) angeordnet ist, um eine elastische Kraft bereitzustellen, so dass das Verriegelungsglied (71) in einer der Verriegelungsnuten (63) verriegelt wird.

4. Winkeleinsteller für einen Fahrradsattel nach Anspruch 1, ferner umfassend:
- eine Mehrzahl von Verriegelungsnuten bzw. -rillen (231), die in der Längsrichtung des Rahmenverbinders (10) gebildet sind und in dem Rahmen (330) aufgenommen sind;
- eine Stütz- bzw. Trägerfeder (233), die den Rahmenverbinder (10) elastisch stützt bzw. trägt, so dass der Rahmenverbinder (10) von dem Rahmen (30) beabstandet ist;
- ein Verriegelungsglied (239), das selektiv in den Verriegelungsnuten bzw. -rillen (231) verriegelt wird bzw. ist, um eine Höhe des Rahmenverbinders (10) bezüglich des Rahmens (330) zu steuern bzw. zu regulieren;
- einen Teil- bzw. Unterbetätigungshebel (245), der an dem Rahmen montiert ist, der das Verriegelungsglied (239) betätigt; und
- einen Teil- bzw. Unterdraht (247), der das Verriegelungsglied (239) mit dem Teil- bzw. Unterbetätigungshebel (245) verbindet und das Verriegelungsglied (239) betätigt, wenn der Teil- bzw. Unterbetätigungshebel (245) betätigt wird.

5. Winkeleinsteller für einen Fahrradsattel nach Anspruch 4, ferner umfassend ein teil- bzw. unterelastisches Glied (238), das zwischen dem Rahmen (330) und dem Verriegelungsglied (239) angeordnet ist, um eine elastische Kraft bereitzustellen, so dass das Verriegelungsglied (239) in einer der Verriegelungsnuten (231) verriegelt wird.

## Revendications

1. Organe de réglage d'angle (100) pour une selle de bicyclette, qui est installé entre un cadre (330) d'une bicyclette et une selle (350), l'organe de réglage d'angle (100) comprenant:
- un raccord de cadre (10) raccordé au cadre (330);
- un raccord de selle (20) supportant la selle (350), raccordé de façon rotative à l'extrémité supérieure du raccord de cadre (10), et comportant un nez (23) au fond faisant face au raccord de cadre (10);
- un ensemble de réglage d'angle (30) disposé entre le raccord de cadre (10) et le raccord de selle (20), et comportant une pluralité de crans de verrouillage (31) où le nez (23) est sélectivement en prise pour commander l'angle de rotation du raccord de selle (20);
- un levier d'actionnement (40) monté sur le cadre (330) pour actionner l'ensemble de réglage d'angle (30);
- un fil métallique (50) raccordant l'ensemble de réglage d'angle (30) au levier d'actionnement (40) et déplaçant en va-et-vient l'ensemble de réglage d'angle (30), lorsque le levier d'actionnement (40) est actionné; et
- un élément élastique (35) fournissant une force élastique de sorte que le nez (23) du raccord de selle (20) soit en prise avec un quelconque des crans de verrouillage (31);
ledit organe de réglage d'angle (100) étant **caractérisé en ce que** l'élément élastique (35) est disposé entre le raccord de cadre (10) et l'ensemble de réglage d'angle (30), et **en ce que** les crans de verrouillage (31) de l'ensemble de réglage d'angle (30) présentent des formes d'épaulement comportant des parties épaulées inclinées, et dans lequel le nez (23) du raccord de selle (20) est sélectivement en prise avec les crans de verrouillage (31) conformément avec le mouvement en va-et-vient de l'ensemble de réglage d'angle (30), de sorte que l'angle de rotation du raccord de selle (20) soit commandé.

2. Organe de réglage d'angle pour une selle de bicyclette selon la revendication 1, comprenant en outre:
- une tige de support de selle (61) supportant la selle (350), se déplaçant en va-et-vient dans le raccord de selle (20), et comportant une pluralité de rainures de verrouillage (63) formées dans la direction longitudinale de la tige;
- un ressort de support (69) supportant élastiquement la tige de support de selle de sorte que la selle (350) soit espacée du raccord de selle (20);
- un élément de verrouillage (71) verrouillé sélectivement dans les rainures de verrouillage (63) pour commander la hauteur de la tige de support de selle (61);
- un sous-levier d'actionnement (73) monté sur le cadre (330) actionnant l'élément de verrouillage (71); et
- un sous-fil métallique (75) raccordant l'élément de verrouillage (71) au sous-levier d'actionnement (73) et actionnant l'élément de verrouillage (71), lorsque le sous-levier d'actionnement (73) est actionné.

3. Organe de réglage d'angle pour une selle de bicyclette selon la revendication 2, comprenant en outre un sous-élément élastique (72) disposé entre le raccord de selle (20) et l'élément de verrouillage (71) pour fournir une force élastique de sorte que l'élément de verrouillage (71) soit verrouillé dans une quelconque des rainures de verrouillage (63).

4. Organe de réglage d'angle pour une selle de bicyclette selon la revendication 1, comprenant en outre:
- une pluralité de rainures de verrouillage (231) formées dans la direction longitudinale du raccord de cadre (10) et reçues dans le cadre (330);
- un ressort de support (233) supportant élastiquement le raccord de cadre (10) de sorte que le raccord de cadre (10) soit espacé du cadre (330);
- un élément de verrouillage (239) sélectivement verrouillé dans les rainures de verrouillage (231) pour commander la hauteur du raccord de cadre (10) par rapport au cadre (330);
- un sous-levier d'actionnement (245) monté sur le cadre actionnant l'élément de verrouillage (239); et
- un sous-fil métallique (247) raccordant l'élément de verrouillage (239) au sous-levier d'actionnement (245) et actionnant l'élément de verrouillage (239), lorsque le sous-levier d'actionnement (245) est actionné.

5. Organe de réglage d'angle pour une selle de bicyclette selon la revendication 4, comprenant en outre un sous-élément élastique (238) disposé entre le cadre (330) et l'élément de verrouillage (239) pour fournir une force élastique de sorte que l'élément de verrouillage (239) soit verrouillé dans une quelconque des rainures de verrouillage (231).
